# EUROPÄISCHE PATENTSCHRIFT

(11) **EP 2 619 885 B1**
(45) Veröffentlichungstag und Bekanntmachung des Hinweises auf die Patenterteilung: **03.06.2020**
(21) Anmeldenummer: 11757554.8
(22) Anmeldetag: 14.09.2011
(51) Int. Cl.: H02K 5/04, H02K 15/14

(54) **VERFAHREN ZUM HERSTELLEN EINER GEHÄUSEANORDNUNG, GEHÄUSEANORDNUNG SOWIE STEMPELVORRICHTUNG**
METHOD FOR PRODUCING A HOUSING ASSEMBLY, HOUSING ASSEMBLY AND RAM DEVICE
PROCÉDÉ DE PRODUCTION D'UN ENSEMBLE CARTER, ENSEMBLE CARTER CORRESPONDANT ET DISPOSITIF DE POINÇONNAGE

(30) Priorität: 20.09.2010 DE 102010041062
(43) Veröffentlichungstag der Anmeldung: 31.07.2013
(60) Teilanmeldung: 14183869.8
(73) Patentinhaber: Brose Fahrzeugteile SE & Co. Kommanditgesellschaft, Würzburg, 97076 Würzburg (DE)
(72) Erfinder: DEHN, Jochen, 97072 Würzburg (DE); MARKO, Tomasovic, 63741 Aschaffenburg (DE); MAY, Sebastian, 97282 Retzstadt (DE)
(74) Vertreter: Isarpatent
(86) Internationale Anmeldenummer: PCT/EP2011/004611
(87) Internationale Veröffentlichungsnummer: WO 2012/038045

(56) Entgegenhaltungen:
- DE-A1- 2 249 684
- DE-A1- 2 706 849
- DE-A1-102007 060 280
- US-A1- 2002 047 391

## Beschreibung

Die Erfindung betrifft ein Verfahren zum Herstellen einer Gehäuseanordnung, eine Gehäuseanordnung sowie eine Stempelvorrichtung.

Die vorliegende Erfindung sowie die ihr zugrunde liegende Problematik werden nachfolgend in Bezug auf eine Gehäuseanordnung für einen Elektromotor näher erläutert.

Die Druckschrift DE 19 43 053 beschreibt eine Gehäuseanordnung für einen Elektromotor, welche ein Gehäuseteil und ein Verschlussteil aufweist. Das Verschlussteil ist als Lagerschild ausgebildet. Das Verschlussteil ist an dem Gehäuseteil angenietet. Dazu sind an dem Gehäuseteil Nietbolzen ausgebildet. Die Nietbolzen erstrecken sich axial durch entsprechende Löcher in dem Verschlussteil. Die Nietköpfe sind von dem Gehäuseteil aus gesehen hinter dem Verschlussteil ausgebildet, um dadurch einen Formschluss zwischen dem Gehäuseteil und dem Verschlussteil zu schaffen. US 2002/0047391 A1 offenbart ein Nietverfahren und eine Stempelvorrichtung zum Herstellen einer Gehäuseanordnung für eine elektrische Maschine.

Aus der Druckschrift DE 2 249 684 A1 ist ein elektrischer Kleinmotor bekannt, welcher ein den Motoranker umgreifendes Gehäuseteil aufweist. An der kollektorseitigen Stirnfläche des Gehäuseteils ist ein Lagerschild befestigt, in dem die Motorwelle durch eine mit dem Lagerschild verbundenen Buchse gelagert ist. Der Lagerschild hat vier Verlängerungen, die sich über die Stirnfläche des Gehäuseteils erstrecken und in dort vorgesehene randoffene Aussparungen eingepasst liegen.

Zur Befestigung des Lagerschilds am Gehäuseteil sind die seitlichen Randbereiche der Aussparungen durch ein in Achsrichtung angesetztes, meißelartiges Werkzeug über die Verlängerungen geschert, so dass diese Verlängerungen fest in den ihnen zugeordneten Aussparungen verstemmt sind und der Lagerschild dadurch mit dem Gehäuseteil verbunden ist. In den Aussparungen des Gehäuseteils sind gegenüber diesen schmalere Ausnehmungen vorgesehen, so dass die Stirnfläche des Gehäuseteils einen stufenförmigen Verlauf hat. Die Ausnehmungen dienen zur Aufnahme von vier radial gerichteten Lappen einer den auf der Motorwelle sitzenden Kollektor umgreifenden Tragplatte.

Ferner ist der Anmelderin intern ein Verfahren zum Herstellen einer Gehäuseanordnung für einen Elektromotor bekannt. Bei diesem Verfahren wird ein Verschlussteil mit einem Gehäuseteil verstemmt, das heißt es wird eine Presspassung zwischen dem Gehäuseteil und dem Verschlussteil erzeugt.

Bei dem vorstehend beschriebenen, ersten Ansatz zum Herstellen einer Gehäuseanordnung hat es sich als nachteilig herausgestellt, dass das Vorsehen der Nietbolzen mit einem erheblichen Fertigungsaufwand verbunden ist. Bei dem vorstehend beschriebenen zweiten Ansatz hat es sich als nachteilig herausgestellt, dass bei dem Verstemmen hohe Axialkräfte auftreten, welche zu einer Verformung des Gehäuseteils führen.

Aufgabe der vorliegenden Erfindung ist es, die vorstehend beschriebenen Nachteile zu vermeiden.

Diese Aufgabe wird erfindungsgemäß durch ein Verfahren mit den Merkmalen des Patentanspruchs 1, durch eine Gehäuseanordnung mit den Merkmalen des Patentanspruchs 7 und/oder durch eine Stempelvorrichtung mit den Merkmalen des Patentanspruchs 8 gelöst.

Demgemäß wird ein Verfahren zum Herstellen einer Gehäuseanordnung für eine elektrische Maschine, gemäß dem Patentanspruch 1 bereitgestellt.

Weiterhin wird eine Gehäuseanordnung für eine elektrische Maschine gemäß dem Patentanspruch 7 bereitgestellt.

Ferner wird eine Stempelvorrichtung gemäß dem Patentanspruch 8 zur Verwendung in dem erfindungsgemäßen Verfahren bereitgestellt.

Die der vorliegenden Erfindung zugrunde liegende Idee besteht darin, einen Bereich eines Verschlussteils in Form einer Delle umzuformen, um dadurch eine Verbindung zwischen dem Verschlussteil und einem Gehäuseteil zu schaffen. Es handelt sich demnach um eine lediglich lokale Umformung des Verschlussteils, welche zu einer größeren Ausdehnung des Verschlussteils in der Ebene der Delle führt. Wird aber nun diese Ausdehnung durch das Gehäuseteil beschränkt bzw. unterbunden, kommt es zu einem Kraftschluss zwischen dem Verschlussteil und dem Gehäuseteil. Dieser Kraftschluss wird vorliegend dazu genutzt, das Gehäuseteil mit dem Verschlussteil fest zu verbinden.

Der Vorteil des erfindungsgemäßen Ansatzes besteht darin, dass keine zusätzlichen Bauteile, wie Schrauben, Nieten oder dergleichen, benötigt werden, um das Verschlussteil mit dem Gehäuseteil zu verbinden. Weiterhin ist der Krafteintrag in das Verschlussteil bzw. das Gehäuseteil aufgrund der lediglich lokalen Umformung des Verschlussteils beispielsweise im Vergleich zu dem bekannten Verstemmen nur gering, so dass eine nachteilige Verformung des Gehäuseteils vermieden werden kann.

Vorteilhafte Ausgestaltungen und Weiterbildungen der vorliegenden Erfindung ergeben sich aus den weiteren Unteransprüchen und aus der Beschreibung in Zusammenschau mit den Figuren der Zeichnung.

Unter einer "Delle" ist vorliegend eine konkave, plastische Verformung in dem Verschlussteil zu verstehen. Bevorzugt weist die Delle in der Draufsicht auf das Verschlussteil eine kreisförmige Außenkontur auf.

Gemäß einer Ausgestaltung des erfindungsgemäßen Verfahrens erfolgt der Schritt des Umformens mittels eines Stempels, welcher rings um eine Mittelachse der auszubildenden Delle gedreht wird und unter einem variierenden Winkel gegen die Mittelachse geneigt ist, wobei der Stempel axial in Bezug auf die Mittelachse zugestellt wird und der Kontaktpunkt des Stempels auf dem Bereich einer Hypozykloide folgt, wodurch das Material im Wesentlichen in axialer und tangentialer Richtung in Bezug auf die Mittelachse fließt. Diese Bewegung des Stempels entspricht der Bewegung, die auch beim Radialnieten zum Einsatz kommt. Dadurch kann die Delle mit einem vergleichsweise geringen Kraftaufwand in dem Verschlussteil geformt werden, so dass eine übermäßige bzw. jegliche Verformung des Gehäuseteils vermieden werden kann.

Gemäß einer weiteren alternativen Ausgestaltung des erfindungsgemäßen Verfahrens erfolgt der Schritt des Umformens mittels eines Stempels, welcher rings um eine Mittelachse der auszubildenden Delle gedreht wird und unter einem konstanten Winkel gegen die Mittelachse geneigt ist, wobei der Stempel axial in Bezug auf die Mittelachse zugestellt wird und der Kontaktpunkt des Stempels auf dem Bereich einer geneigten Spirale folgt, wodurch das Material im Wesentlichen in axialer und tangentialer Richtung in Bezug auf die Mittelachse fließt. Die Bewegung des Stempels entspricht der Bewegung, wie sie auch beim Taumelnieten zum Einsatz kommt. Auch diese Bewegung des Stempels führt dazu, dass ein vergleichsweise nur geringer Kraftaufwand erforderlich ist, um die Delle in dem Verschlussteil zu formen, wodurch wiederum eine übermäßige Verformung bzw. jegliche Verformung des Gehäuseteils vermieden werden kann.

Gemäß des erfindungsgemäßen Verfahrens wird der Bereich mittels einer kegelförmigen Fläche des Stempels umgeformt. Die kegelförmige Fläche erleichtert das Formen der Delle.

Gemäß einer weiter bevorzugten Ausgestaltung des erfindungsgemäßen Verfahrens werden mehrere Bereiche des Verschlussteils gleichzeitig jeweils in Form einer Delle umgeformt. Dadurch wird das Verschlussteil gleichmäßig umgeformt, so dass es nicht zu einem Verzug desselben oder einem Verkanten desselben gegenüber dem Gehäuseteil kommt.

Gemäß einer bevorzugten Ausgestaltung des erfindungsgemäßen Verfahrens wird das Verschlussteil vor dem Schritt des Umformens in einen Aufnahmebereich des Gehäuseteils eingelegt und mittels des Schrittes des Umformens mit dem Aufnahmebereich verspannt. Wie bereits erläutert, führt das Formen der Delle in dem Verschlussteil dazu, dass sich dieses in der Ebene der Delle vergrößert. Um diese Vergrößerung für den Kraftschluss zu nutzen, wird das Verschlussteil gemäß der vorliegenden Ausgestaltung in einen Aufnahmebereich des Gehäuseteils eingelegt. Die mit dem Formen der Delle einhergehende Vergrößerung des Verschlussteils führt dann zu einem Verspannen des Verschlussteils mit dem Aufnahmebereich des Gehäuseteils. Das Verspannen ergibt sich daraus, dass das Verschlussteil gegen beispielsweise zwei sich gegenüberliegende Abschnitte des Aufnahmebereichs presst.

Gemäß einer weiter bevorzugten Ausgestaltung des erfindungsgemäßen Verfahrens wird das Verschlussteil mit wenigstens einer Lasche ausgebildet, welche in eine korrespondierende Ausnehmung in dem Gehäuseteil eingreift, wobei die Delle in der Lasche geformt wird. Zunächst einmal sorgt die Lasche für einen Formschluss zwischen dem Verschlussteil und dem Gehäuseteil, beispielsweise in Umfangsrichtung des Gehäuseteils. Weiterhin bedingt der Umstand, dass die Lasche von der Ausnehmung an mehreren Seiten, insbesondere gegenüberliegenden Seiten, begrenzt wird, dass das Formen der Delle in der Lasche zu einem besseren Kraftschluss zwischen der Lasche und der korrespondierenden Ausnehmung führt.

Gemäß einer weiter bevorzugten Ausgestaltung des erfindungsgemäßen Verfahrens wird eine Öffnung eines Trägerteils auf einen Zapfen an dem Verschlussteil aufgesteckt, wobei der Zapfen zum Hintergreifen des Trägerteils umgeformt wird. Die Umformung des Zapfens erfolgt vorzugsweise durch Taumel- oder Radialnieten. Diese Art der Verbindung zwischen dem Trägerteil und dem Verschlussteil weist den Vorteil auf, dass diese einfach herstellbar ist. Außerdem werden keine zusätzlichen Bauteile, wie Schrauben, benötigt. Schrauben sind nachteilig mit einem Loch in dem Verschlussteil verbunden, was wiederum zu Undichtigkeiten gegenüber Fluiden führen kann. Derartige Undichtigkeiten sind aber insbesondere im Bereich der Elektromotoren zu vermeiden.

Gemäße einer weiter bevorzugten Ausgestaltung des erfindungsgemäßen Verfahrens ist das Gehäuseteil als Motorgehäusetopf, das Verschlussteil als Lagerschild und/oder das Trägerteil als Bürstenträgerteil ausgebildet. "Lagerschild" meint ein solches Verschlussteil, welches zur Aufnahme eines Lagers geeignet ist. "Bürstenträgerteil" meint ein solches Trägerteil, welches zum Tragen von Bürsten für einen elektrischen Gleitkontakt zum Kollektor oder zu Schleifringen des rotierenden Teils der elektrischen Masche geeignet ist.

Die vorliegende Erfindung wird nachfolgend anhand der in den Figuren der Zeichnung angegebenen Ausführungsbeispiele näher erläutert. Es zeigen dabei:
- Fig. 1: ausschnittsweise und teilweise schematisch eine Draufsicht auf eine Gehäuseanordnung gemäß einem Ausführungsbeispiel der vorliegenden Erfindung in einem ersten Zustand;
- Fig. 2: die Gehäuseanordnung aus Fig. 1 in einem zweiten Zustand;
- Fig. 3: einen Schnitt A-A aus Fig. 2;
- Fig. 4: eine Stempelvorrichtung gemäß einem Ausführungsbeispiel der vorliegenden Erfindung; und
- Fig. 5: einen Verfahrensablauf gemäß einem Ausführungsbeispiel der vorliegenden Erfindung.

In den Figuren der Zeichnung bezeichnen - sofern nichts Anderes ausgeführt ist - gleiche Bezugszeichen, gleiche Bauteile, Elemente und Merkmale.

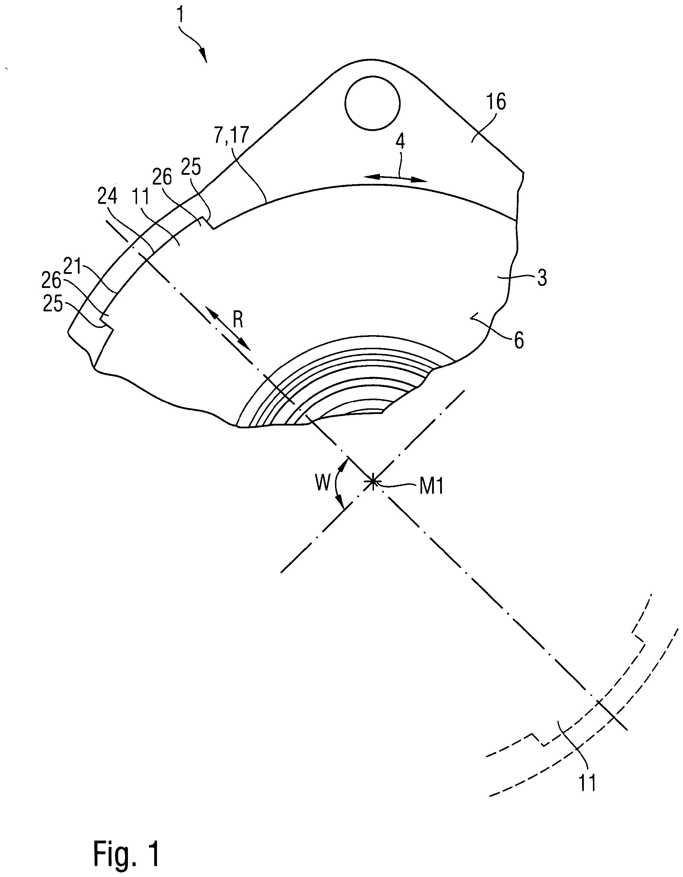

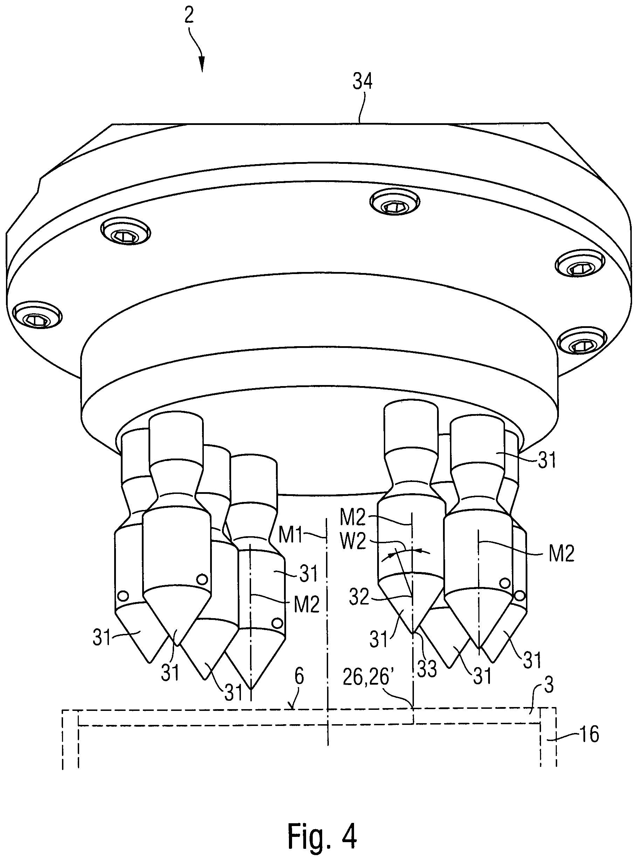

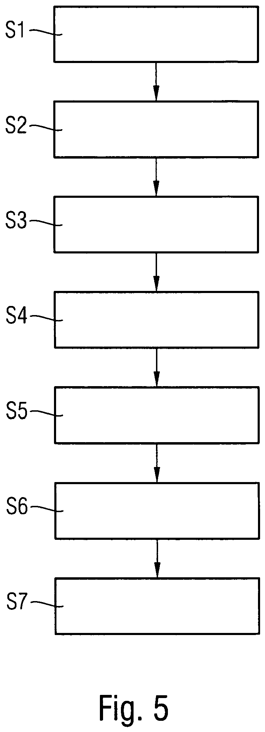

Ausführungsbeispiele einer Gehäuseanordnung 1, siehe Figuren 1-3, eines Verfahrens zum Herstellen derselben, siehe Fig. 5, sowie eine Stempelvorrichtung 2, siehe Fig. 4, zur Verwendung in dem Verfahren werden nachfolgend mit Bezug auf sämtliche Figuren näher erläutert.

### Schritt S1:

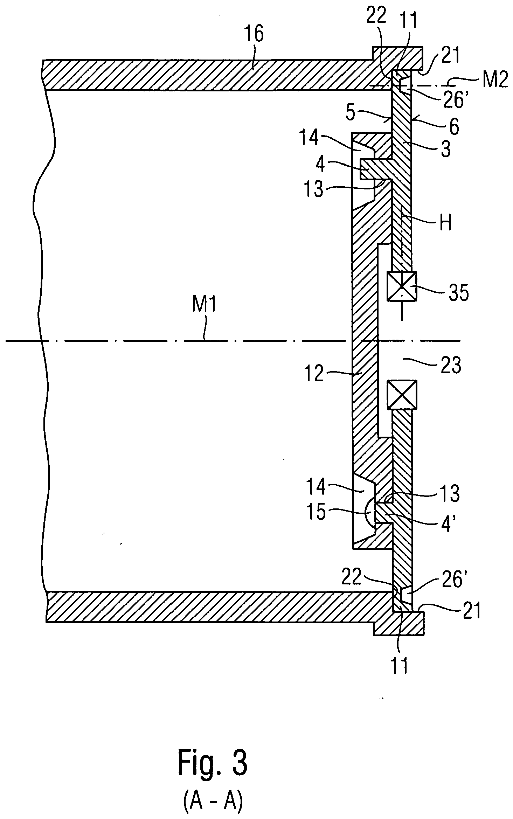

In einem Schritt S1, siehe Fig. 5, wird zunächst ein beispielsweise in etwa ringförmiges Lagerschild 3, siehe Fig. 3, bereitgestellt. Der Lagerschild 3 ist bevorzugt einstückig mit mehreren Zapfen 4 gebildet. Die Zapfen 4 erstrecken sich im Wesentlichen senkrecht zu einer Haupterstreckungsebene H des Lagerschilds 3. Die Zapfen 4 sind auf einer Rückseite 5 des Lagerschilds 3 gebildet.

In Fig. 1 ist die Vorderseite 6 des Lagerschilds 3 zu sehen. Außerdem ist anhand von Fig. 1 zu erkennen, dass an einem äußeren kreisförmigen Umfang 7 des Lagerschilds 3 mehrere Laschen 11 ausgebildet sind. Vorzugsweise sind vier der Laschen 11 entlang des Umfangs 7 des Lagerschilds 3 angeordnet. Diese können beispielsweise jeweils zueinander unter einem Winkel W von 90° zueinander um eine Mittelachse M1 angeordnet sein.

Der Lagerschild 3 ist aus Metall, vorzugsweise Stahl, hergestellt.

### Schritt S2:

In einem Schritt S2 wird ein Bürstenträgerteil 12, siehe Fig. 3, bereitgestellt. Das Bürstenträgerteil 12 weist Durchgangsöffnungen 13 auf. Die Durchgangsöffnungen 13 können im Bereich von Vertiefungen 14 in dem Bürstenträgerteil 12 ausgebildet sein.

Das Bürstenträgerteil 12 ist vorzugsweise aus Kunststoff hergestellt.

### Schritt S3:

In einem Schritt S3 wird das Bürstenträgerteil 12 mit seinen Durchgangsöffnungen 13 auf die Zapfen 4 des Lagerschilds 3 aufgeschoben. Hierauf werden die Zapfen 4 mittels Taumel- oder Radialnietens derart umgeformt, dass sich ein Kopf 15 bildet, wie für den Zapfen 4' illustriert, siehe Fig. 3. Der Kopf 15 hintergreift das Bürstenträgerteil 12 und verbindet somit das Bürstenträgerteil 12 fest mit dem Lagerschild 3. Beim Radial- oder Taumelnieten der Zapfen 4 ist der Krafteintrag in das an sich empfindliche (weil aus Kunststoff gefertigt) Bürstenträgerteil 12 nur gering und genau steuerbar.

### Schritt S4:

In einem Schritt S4 wird ein Motorgehäusetopf 16 mit einem vorzugsweise ringförmigen Querschnitt bereitgestellt. Der Motorgehäusetopf 16 ist an seinem inneren Umfang 17, siehe Fig. 1, mit Ausnehmungen 21 gebildet. Die Ausnehmungen 21 sind zur Aufnahme der Laschen 11 geeignet ausgebildet. Weiterhin ist der Motorgehäusetopf 16 mit einer Schulter 22 für eine Anlage der Laschen 11 in axialer Richtung in Bezug auf die Mittelachse M1 gebildet.

Der Motorgehäusetopf 16 ist aus Metall, vorzugsweise aus Stahl gebildet.

### Schritt S5:

In einem Schritt S5 wird die Einheit aus Lagerschild 3 und Bürstenträgerteil 12 in den allgemein mit 23, siehe Figur 3, bezeichneten Aufnahmebereich in dem Motorgehäusetopf 16 eingelegt. Der Aufnahmebereich 23 wird von den Ausnehmungen 21, dem inneren Umfang 17 sowie den Schultern 22 begrenzt.

Beim Einlegen des Lagerschilds 3 in den Motorgehäusetopf 16 gelangen die Laschen 11 des Lagerschilds 3 in Eingriff mit den Ausnehmungen 21. Dieser Eingriff sorgt für einen Formschluss in der Umfangsrichtung U bezogen auf die Mittelachse M1 zwischen dem Lagerschild 3 und dem Motorgehäusetopf 16. In dem in Fig. 1 gezeigten Ausführungsbeispiel weisen die Laschen 11 im Wesentlichen eine Rechtecksform auf, welche von Flächen 24, 25 der Ausnehmung 21 begrenzt werden. Die Flächen 25 liegen sich dabei in der Umfangsrichtung U gegenüber und sorgen für den erwähnten Formschluss in der Umfangsrichtung U. Die Fläche 24 dagegen sorgt für einen Formschluss in der radialen Richtung R in Bezug auf die Mittelachse M1.

### Schritt S6:

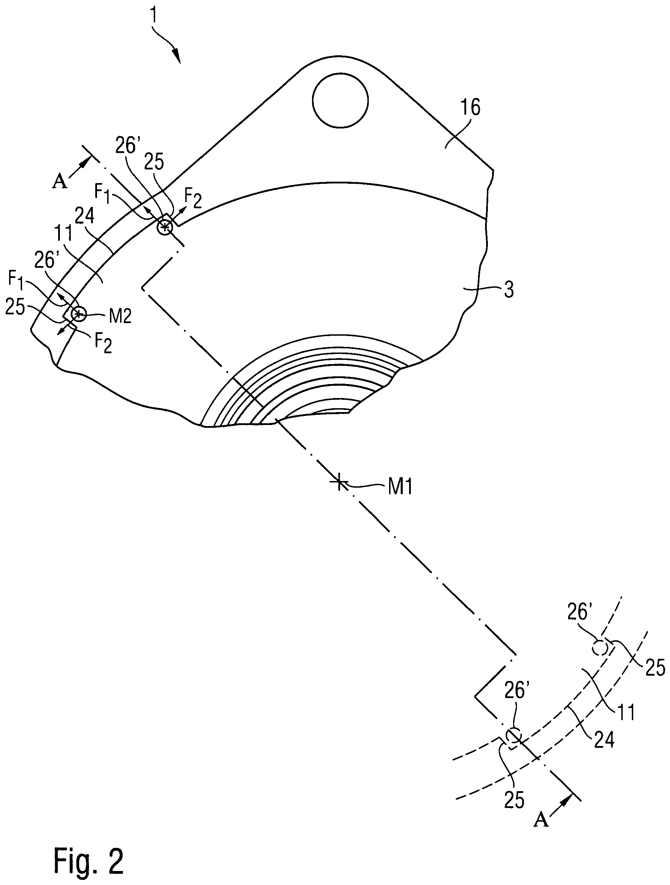

In einem Schritt S6 wird der Lagerschild 3 mit dem Motorgehäuseteil 16 fest verbunden. Dazu werden Bereiche 26, siehe Fig. 1, in Eckbereichen der im Wesentlichen rechtecksförmige Laschen 11 jeweils in Form einer Delle 26', siehe Fig. 2, umgeformt. Dazu wird die Anordnung aus Lagerschild 3 und Motorgehäuse 16 unter der Stempelvorrichtung 2, siehe Fig. 4, angeordnet.

Die Stempelvorrichtung 2 weist acht Stempel 31 auf. Genauso könnten aber auch zwei, drei oder mehr Stempel 31 vorgesehen sein. Die Stempel 31 sind jeweils mit einer kegelförmigen Fläche 32 gebildet. Die kegelförmige Fläche 32 bildet eine Spitze 33 in Richtung des darunter angeordneten Lagerschilds 3 aus. Die acht Stempel 31 sind an einem Halter 34 angebracht, welcher in seinem Inneren eine nicht dargestellte Mechanik zum Bewegen eines jeden Stempels 31 auf die nachfolgend beschriebene Weise aufweist. Diese Bewegung wird nachfolgend anhand lediglich eines Stempels 31 beispielhaft näher erläutert.

Der Stempel 31 wird rings um die Mittelachse M2 einer jeweiligen auszubildenden Delle 26' gedreht. Gleichzeitig wird der Winkel W2, um den der Stempel 31 gegen die Mittelachse M2 geneigt ist, variiert. Weiterhin gleichzeitig wird der Stempel 31 axial, das heißt entlang der Mittelachse M2, in Richtung des Lagerschilds 3 zugestellt. Der Kontaktpunkt des Stempels 31 auf dem Bereichs 26 folgt dabei einer Hypozykloide, wodurch das Material im Wesentlichen in axialer F1, F2 (siehe Fig. 2) und tangentialer Richtung in Bezug auf die Mittelachse M2 fließt.

Jeder der Stempel 31 der Stempelvorrichtung 2 wird auf diese Weise bewegt. Die axiale Zustellung kann durch Bewegen des Halters 34 entlang der Achse M1, also in Richtung des Lagerschilds 3 erfolgen, das heißt insoweit werden die Stempel 31 gemeinsam bewegt.

Die vorstehend beschriebene Bewegung eines Stempels 31 entspricht der beim Radialnieten. Alternativ wäre es auch denkbar, den Winkel W2 konstant zu halten, wobei dann der Punkt des Stempels 31 auf dem Bereich 26 einer abwärts geneigten Spirale folgt. Die somit resultierende Bewegung entspricht der Bewegung beim Taumelnieten.
Die gebildeten Dellen 26' weisen eine im Schnitt, siehe Fig. 3, konvexe und in der Draufsicht, siehe Fig. 2, kreisförmige Gestalt auf.

### Schritt S7:

In einem Schritt S7 wird die hergestellte Gehäuseanordnung 1 weiter ausgerüstet. Dabei kann beispielsweise ein Lager 35, siehe Fig. 3, in den Lagerschild 3 eingebaut werden. Weiterhin kann das Bürstenträgerteil 12 mit nicht dargestellten Bürsten versehen werden. Letztendlich wird somit ein Elektromotor hergestellt.

Der Materialfluss in radialer Richtung, welcher sich aufgrund des vorstehend beschriebenen Taumel- oder Radialumformverfahrens ergibt, ist in Fig. 2 mit zwei Pfeilen F1 und F2 für die Dellen 26' kenntlich gemacht. Der Materialfluss F1, F2 bewirkt, dass sich der Lagerschild 3 in der Haupterstreckungsebene H, in welcher die Dellen 26' liegen, vergrößert. Wie in Fig. 2 zu erkennen, bewirkt der Materialfluss F1 ein Verspannen des Lagerschilds 3 bzw. der sich diagonal gegenüberliegenden Laschen 11 mit den Flächen 24 des Motorgehäusetopfes 16. Ferner führt der Materialfluss F2 zu einem Verspannen einer jeweiligen Lasche 11 zwischen den beiden Flächen 25 des Motorgehäusetopfes 16.

Mittels der Stempelvorrichtung 2 gemäß dem vorliegenden Ausführungsbeispiel können die vier Laschen 11 gleichzeitig jeweils mit zwei Dellen 26' gebildet werden. Dadurch ergibt sich eine gleichmäßige Kraftverteilung beim Schritt des Umformens, wodurch ein Verkippen des Lagerschilds 3 um die Mittelachse M1 vermieden werden kann. Außerdem ist es zeitsparend, die mehreren Dellen 26' gleichzeitig auszubilden.

Obwohl die Erfindung anhand bevorzugter Ausführungsbeispiele beschrieben wurde, ist sie darauf nicht beschränkt, sondern im Rahmen des Schutzbereiches der Patentansprüche auf vielfältige Weise modifizierbar. Insbesondere sind die für die erfindungsgemäße Gehäuseanordnung beschriebenen Ausgestaltungen und Ausführungsbeispiele entsprechend auf das erfindungsgemäße Verfahren sowie auf die erfindungsgemäße Stempelvorrichtung anwendbar, und umgekehrt. Weiter sei darauf hingewiesen, dass "ein" vorliegend kein Vielzahl ausschließt.

### Bezugszeichenliste

- 1: Gehäuseanordnung
- 2: Stempelvorrichtung
- 3: Lagerschild
- 4: Zapfen
- 4': Zapfen
- 5: Rückseite
- 6: Vorderseite
- 7: Umfang
- 11: Lasche
- 12: Bürstenträgerteil
- 13: Durchgangsöffnung
- 14: Vertiefung
- 15: Kopf
- 16: Motorgehäusetopf
- 17: Umfang
- 21: Ausnehmung
- 22: Schulter
- 23: Aufnahmebereich
- 24: Fläche
- 25: Fläche
- 26: Bereich
- 26': Delle
- 31: Stempel
- 32: kegelförmige Fläche
- 33: Spitze
- 34: Halter
- 35: Lager

- F1: Fließrichtung
- F2: Fließrichtung
- H: Haupterstreckungsebene
- M1: Mittelachse
- M2: Mittelachse
- R: radiale Richtung
- U: Umfangsrichtung
- W1: Winkel
- W2: Winkel

## Patentansprüche

1. Verfahren zum Herstellen einer Gehäuseanordnung (1) für eine elektrische Maschine, wobei ein Bereich (26) eines Verschlussteils (3) in Form einer Delle (26') umgeformt wird, um dadurch Material des Verschlussteils (3) gegen ein Gehäuseteil (16) für einen Kraftschluss zwischen dem Verschlussteil (3) und dem Gehäuseteil (16) zu pressen, wobei das Umformen mittels eines Stempels (31) erfolgt, **dadurch gekennzeichnet, dass** der Bereich (26) mittels einer kegelförmigen Fläche (32) des Stempels (31) umgeformt wird, wobei der Stempels (31) rings um eine Mittelachse (M2) der auszubildenden Delle (26') gedreht wird und unter einem variierenden Winkel (W2) gegen die Mittelachse (M2) geneigt ist, wobei der Stempel (31) axial in Bezug auf die Mittelachse (M2) zugestellt wird und der Kontaktpunkt des Stempels (31) auf dem Bereich (26) einer Hypozykloide folgt, wodurch das Material im Wesentlichen in axialer (F1, F2) und tangentialer Richtung in Bezug auf die Mittelachse (M2) fließt, oder
wobei der Stempel (31) rings um eine Mittelachse (M2) der auszubildenden Delle (26') gedreht wird und unter einem konstanten Winkel (W2) gegen die Mittelachse (M2) geneigt ist, wobei der Stempel (31) axial in Bezug auf die Mittelachse (M2) zugestellt wird und der Kontaktpunkt des Stempels (31) auf dem Bereich (26) einer geneigten Spirale folgt, wodurch das Material im Wesentlichen in axialer (F1, F2) und tangentialer Richtung in Bezug auf die Mittelachse (M2) fließt.

2. Verfahren nach Anspruch 1,
**dadurch gekennzeichnet,**
**dass** mehrere Bereiche (26) des Verschlussteils (3) gleichzeitig jeweils in Form einer Delle (26') umgeformt werden.

3. Verfahren nach einem der vorangehenden Ansprüche,
**dadurch gekennzeichnet,**
**dass** das Verschlussteil (3) vor dem Schritt des Umformens in einen Aufnahmebereich (23) des Gehäuseteils (16) eingelegt und mittels des Schrittes des Umformens mit dem Aufnahmebereich (23) verspannt wird.

4. Verfahren nach einem der vorangehenden Ansprüche,
**dadurch gekennzeichnet,**
**dass** das Verschlussteil (3) mit wenigstens einer Lasche (11) ausgebildet wird, welche in eine korrespondierende Ausnehmung (21) in dem Gehäuseteil (16) eingreift, wobei die Delle (26') in der Lasche (11) geformt wird.

5. Verfahren nach einem der vorangehenden Ansprüche,
**dadurch gekennzeichnet,**
**dass** eine Öffnung (13) eines Trägerteils (12) auf einen Zapfen (4, 4') an dem Verschlussteil (3) aufgesteckt wird, wobei der Zapfen (4, 4') zum Hintergreifen (15) des Trägerteils (12) umgeformt wird.

6. Verfahren nach einem der vorangehenden Ansprüche,
**dadurch gekennzeichnet,**
**dass** das Gehäuseteil als Motorgehäusetopf (16), das Verschlussteil als Lagerschild (3) und/oder das Trägerteil als Bürstenträgerteil (12) ausgebildet ist.

7. Gehäuseanordnung (1) für eine elektrische Maschine,
- mit einem Gehäuseteil (16), wobei das Gehäuseteil (16) ein Motorgehäusetopf (16) ist, welcher an seinem inneren Umfang (17) mit Ausnehmungen (21) ausgebildet ist; und
- mit einem Verschlussteil (3), wobei das Verschlussteil (3) ein in etwa ringförmiges Lagerschild (3) ist;
wobei an einem äußeren kreisförmigen Umfang (7) des Lagerschilds (3) mehrere im Wesentlichen rechteckförmige Laschen (11) ausgebildet sind, wobei die Laschen (11) des Lagerschilds (3) in Eingriff mit den Ausnehmungen (21) sind, wobei dieser Eingriff für einen Formschluss in der Umfangsrichtung (U) bezogen auf die Mittelachse (M1) zwischen dem Lagerschild (3) und dem Motorgehäusetopf (16) sorgt, **dadurch gekennzeichnet, dass** das Lageschild (3) mit dem Motorgehäusetopf (16) kraftschlüssig verbunden ist, indem Bereiche (26) in Eckbereichen der im Wesentlichen rechteckförmigen Laschen (11) jeweils in Form einer Delle (26') umgeformt sind gemäß einem Verfahren nach einem der vorstehenden Ansprüche.

8. Stempelvorrichtung (2) zur Verwendung in dem Verfahren nach einem der vorhergehenden Ansprüche 1-7
- mit mehreren Stempeln (31), welche gleichzeitig jeweils rings um eine Mittelachse (M2) einer jeweiligen auszubildenden Delle (26') drehbar, unter einem variierenden Winkel (W2) gegen die Mittelachse (M2) neigbar und axial in Bezug auf die Mittelachse (M2) zustellbar sind, wobei der Kontaktpunkt eines jeweiligen Stempels (31) auf dem Bereich (26) entlang einer Hypozykloide bewegbar ist, um dadurch das Material im Wesentlichen in axialer (F1, F2) und tangentialer Richtung in Bezug auf die Mittelachse (M2) zu verdrängen, oder
- mit mehreren Stempeln (31), welche gleichzeitig jeweils rings um eine Mittelachse (M2) einer jeweiligen, auszubildenden Delle (26') drehbar, unter einem konstanten Winkel (W2) gegen die Mittelachse (M2) neigbar und axial in Bezug auf die Mittelachse (M2) zustellbar sind, wobei der Kontaktpunkt eines jeweiligen Stempels (31) auf dem Bereich (26) entlang einer geneigten Spirale bewegbar ist, um dadurch das Material im Wesentlichen in axialer (F1, F2) und tangentialer Richtung in Bezug auf die Mittelachse (M2) zu verdrängen.

## Claims

1. Method for producing a housing arrangement (1) for an electrical machine, a region (26) of a sealing part (3) being formed in the shape of an indentation (26') so as to press material of the sealing part (3) against a housing part (16) for a non-positive fit between the sealing part (3) and the housing part (16), the forming taking place by means of a punch (31),
**characterised in that** the region (26) is formed by means of a conical surface (32) of the punch (31),
the punch (31) being rotated about a central axis (M2) of the indentation (26') to be formed and being inclined at a varying angle (W2) to the central axis (M2), the punch (31) being introduced axially in terms of the central axis (M2) and the contact point of the punch (31) following a hypocycloid on the region (26), causing the material to flow substantially in an axial (F1, F2) and tangential direction with respect to the central axis (M2), or
the punch (31) being rotated about a central axis (M2) of the indentation (26') to be formed and being inclined at a constant angle (W2) to the central axis (M2), the punch (31) being introduced axially in terms of the central axis (M2) and the contact point of the punch (31) following an inclined spiral on the region (26), causing the material to flow substantially in an axial (F1, F2) and tangential direction with respect to the central axis (M2).

2. Method according to claim 1,
**characterised**
**in that** a plurality of regions (26) of the sealing part (3) are simultaneously each formed in the shape of an indentation (26').

3. Method according to any of the preceding claims, **characterised**
**in that** the sealing part (3) is laid in a receiving region (23) of the housing part (16) before the forming step and braced with the receiving region (23) by means of the forming step.

4. Method according to any of the preceding claims, **characterised**
**in that** the sealing part (3) is formed with at least one tab (11) which engages in a corresponding recess (21) in the housing part (16), the indentation (26') being formed in the tab (11).

5. Method according to any of the preceding claims, **characterised**
**in that** an opening (13) of a carrier part (12) is placed on a pin (4, 4') on the sealing part (3), the pin (4, 4') being formed to engage (15) the carrier part (12) from behind.

6. Method according to any of the preceding claims, **characterised**
**in that** the housing part is formed as a motor housing head (16), the sealing part is formed as a bearing plate (3), and/or the carrier part is formed as a brush carrier part (12) .

7. Housing arrangement (1) for an electrical machine,
- having a housing part (16), wherein the housing part (16) is a motor housing head (16) which is formed with recesses (21) on the inner circumference (17) thereof; and
- having a sealing part (3), the sealing part (3) being a substantially annular bearing plate (3);
a plurality of substantially rectangular tabs (11) being formed on an outer circular circumference (7) of the bearing plate (3), the tabs (11) of the bearing plate (3) being engaged with the recesses (21), this engagement providing a positive fit, in the circumferential direction (U) with respect to the central axis (M1), between the bearing plate (3) and the motor housing head (16),
**characterised in that** the bearing plate (3) is non-positively connected to the motor housing head (16), **in that** regions (26) in corner regions of the substantially rectangular tabs (11) are each formed in the shape of an indentation (26') by a method according to any of the preceding claims.

8. Punch device (2) for use in the method according to any of preceding claims 1-7,
- having a plurality of punches (31), which can each be rotated simultaneously about a central axis (M2) of a respective indentation (26') to be formed, inclined at a varying angle (W2) to the central axis (M2), and introduced axially with respect to the central axis (M2), the contact point of each punch (31) being movable along a hypocycloid on the region (26) so as to displace the material substantially in an axial (F1, F2) and tangential direction with respect to the central axis (M2), or
- having a plurality of punches (31), which can each be rotated simultaneously about a central axis (M2) of a respective indentation (26') to be formed, inclined at a constant angle (W2) to the central axis (M2), and introduced axially with respect to the central axis (M2), the contact point of each punch (31) being movable along an inclined spiral on the region (26) so as to displace the material substantially in an axial (F1, F2) and tangential direction with respect to the central axis (M2).

## Revendications

1. Procédé de fabrication d'un ensemble carter (1) pour une machine électrique, dans lequel une zone (26) d'une partie de fermeture (3) est formée sous la forme d'un creux (26') afin de presser ainsi le matériau de la partie de fermeture (3) contre une partie de carter (16) pour une liaison à force entre la partie de fermeture (3) et la partie de carter (16), dans lequel le formage est effectué au moyen d'un poinçon (31), **caractérisé en ce que** la zone (26) est formée au moyen d'une surface conique (32) du poinçon (31), dans lequel le poinçon (31) est tourné autour d'un axe médian (M2) du creux (26') à réaliser et est incliné d'un angle variable (W2) par rapport à l'axe médian (M2), dans lequel le poinçon (31) est approché axialement par rapport à l'axe médian (M2) et le point de contact du poinçon (31) suit une hypocycloïde sur la zone (26), de sorte que le matériau flue sensiblement dans des directions axiales (F1, F2) et tangentielle par rapport à l'axe médian (M2), ou dans lequel le poinçon (31) est tourné autour d'un axe médian (M2) du creux (26') à réaliser et est incliné d'un angle constant (W2) par rapport à l'axe médian (M2), dans lequel le poinçon (31) est approché axialement par rapport à l'axe médian (M2) et le point de contact du poinçon (31) suit une spirale inclinée sur la zone (26), de sorte que le matériau flue sensiblement dans des directions axiales (F1, F2) et tangentielle par rapport à l'axe médian (M2).

2. Procédé selon la revendication 1,
**caractérisé en ce**
**que** plusieurs zones (26) de la partie de fermeture (3) sont formées simultanément, chacune sous la forme d'un creux (26').

3. Procédé selon l'une des revendications précédentes, **caractérisé en ce**
**que** la partie de fermeture (3) est insérée dans une zone de réception (23) de la partie de carter (16) avant l'étape de formage et serrée sur la zone de réception (23) au moyen de l'étape de formage.

4. Procédé selon l'une des revendications précédentes, **caractérisé en ce**
**que** la partie de fermeture (3) est réalisée avec au moins une languette (11) qui s'engage dans un évidement correspondant (21) dans la partie de carter (16), le creux (26') étant formé dans la languette (11).

5. Procédé selon l'une des revendications précédentes, **caractérisé en ce**
**qu'**une ouverture (13) d'une partie de support (12) est montée sur un tenon (4, 4') sur la partie de fermeture (3), le tenon (4, 4') étant formé pour venir se plaquer derrière (15) la partie de support (12).

6. Procédé selon l'une des revendications précédentes, **caractérisé en ce**
**que** la partie de carter est réalisée sous la forme d'un pot de carter de moteur (16), la partie de fermeture est réalisée sous la forme d'un flasque (3) et/ou la partie de support (12) sous la forme d'une partie de support de balais.

7. Ensemble carter (1) pour une machine électrique,
- avec une partie de carter (16), la partie de carter (16) étant un pot de carter de moteur (16) qui est réalisé avec des évidements (21) sur sa périphérie intérieure (17) ; et
- avec une partie de fermeture (3), la partie de fermeture (3) étant un flasque (3) approximativement annulaire ;
dans lequel plusieurs languettes sensiblement rectangulaires (11) sont réalisées sur une périphérie circulaire extérieure (7) du flasque (3), les languettes (11) du flasque (3) étant en prise avec les évidements (21), cette prise assurant un assemblage par complémentarité de forme dans la direction circonférentielle (U) par rapport à l'axe médian (M1) entre le flasque (3) et le pot de carter de moteur (16), **caractérisé en ce que**
le flasque (3) est assemblé à force avec le pot de carter de moteur (16), des zones (26) étant formées dans les zones d'angle des languettes sensiblement rectangulaires (11), chacune sous la forme d'un creux (26'), conformément à un procédé selon l'une des revendications précédentes.

8. Dispositif de poinçonnage (2) à utiliser dans le processus selon l'une des revendications 1 à 7 précédentes,
- comportant plusieurs poinçons (31) qui peuvent tourner simultanément chacun autour d'un axe médian (M2) d'un creux respectif (26') à réaliser, qui peuvent être inclinés d'un angle (W2) variable par rapport à l'axe médian (M2) et peuvent être approchés axialement par rapport à l'axe médian (M2), dans lequel le point de contact d'un poinçon respectif (31) peut être déplacé le long d'une hypocycloïde sur la zone (26), pour ainsi repousser le matériau sensiblement dans des directions axiales (F1, F2) et tangentielle par rapport à l'axe médian (M2), ou
- comportant plusieurs poinçons (31) qui peuvent tourner simultanément chacun autour d'un axe médian (M2) d'un creux respectif (26') à réaliser, qui peuvent être inclinés d'un angle (W2) constant par rapport à l'axe médian (M2) et qui peuvent être approchés axialement par rapport à l'axe médian (M2), dans lequel le point de contact d'un poinçon respectif (31) peut être déplacé le long d'une spirale inclinée sur la zone (26), pour ainsi repousser le matériau sensiblement dans des directions axiales (F1, F2) et tangentielle par rapport à l'axe médian (M2).
